# EUROPEAN PATENT APPLICATION

(11) **EP 2 525 201 A2**
(43) Date of publication of application: **21.11.2012**
(21) Application number: 12167056.6
(22) Date of filing: 08.05.2012
(51) Int. Cl.: G01L 5/00, G01L 5/16

(54) **Magnetostrictive sensor system and method**

(30) Priority: 20.05.2011 US 201113112214
(71) Applicant: General Electric Company, Schenectady, NY 12345 (US)
(72) Inventor: Sipila, Pekka Tapani, Niskayuna, 12309 (US); Goray, Kunal Ravindra, Niskayuna, NY New York 12309 (US); Baller, Marko Klaus, Niskayuna, NY New York 12309 (US); Schramm, Simon Herbert, Niskayuna, NY New York 12309 (US); Sihler, Christof Martin, Niskayuna, NY New York 12309 (US)
(74) Representative: Bedford, Grant Richard

(57) **Abstract**

A magnetostriction-based sensor system 140 for sensing force on a wind turbine rotor shaft 104 having multiple localized magnetized domains 135 sensitive to magnetostriction. The sensor system 140 includes at least two sets of first and second magnetometers. The signals from the at least two sets of first and second magnetometers can be utilized to determine torsional and linear forces being exerted on the wind turbine rotor shaft 104.

## Description

The invention relates generally to a magnetostrictive sensor system and method, and more particularly, to a magnetostrictive sensor system and method for use with wind turbines.

Wind turbines are well known. There are two basic types of commercial wind turbines, namely vertical axis wind turbines and horizontal axis wind turbines. Most horizontal axis wind turbines include a tower, a nacelle, a plurality of rotor blades, and a generator. The tower may be similar to electrical towers or it may be a steel tubular tower. The nacelle is a strong hollow shell that contains the inner workings of the wind turbine, including a low speed rotary shaft and a gearbox. It also includes the rotor blade pitch control and the yaw drive, which controls the position of the turbine relative to the wind. The nacelle also provides the anchor points for the rotor blades. The generator converts the harvested wind energy into electricity.

Wind turbines are subjected to several forms of force. Specifically, wind turbines can be subjected to linear forces as well as torsional forces. High winds and changing of direction for winds can create a load on wind turbines. Excessive loads on wind turbines can create damage to components of the turbines, for example cracking, or can lead to catastrophic failure.

A system and method for determining real-time forces being exerted on a wind turbine would be welcome in the art.

An embodiment of the invention includes a magnetostriction-based sensor system for sensing force on a wind turbine rotor shaft having multiple localized magnetized domains sensitive to magnetostriction. The magnetostriction-based sensor system includes at least two sets of first and second magnetometers, each set being located on one of the magnetized domains. Signals from the at least two sets of first and second magnetometers can be utilized to determine torsional and linear forces being exerted on the wind turbine rotor shaft.

In one aspect, the magnetostriction-based sensor system includes either a programmable logic controller (PLC) or the microcontroller that is configured to subtract signals of one of the first and second magnetometers from the other of the first and second magnetometers for each set of magnetometers to obtain a corrected magnetostrictive signal for each set of magnetometers.

In another aspect, the PLC or microcontroller is configured to add the corrected magnetostrictive signal of one set of magnetometers to the corrected magnetostrictive signal of another set of magnetometers located approximately 180 degrees around the rotor shaft to determine a real-time torsional force being exerted on the rotor shaft. The PLC or microcontroller is configured to subtract the corrected magnetostrictive signal of one set of magnetometers from the corrected magnetostrictive signal of another set of magnetometers located approximately 180 degrees around the rotor shaft to determine a real-time linear force being exerted on the rotor shaft.

An embodiment of the invention includes a wind turbine that includes a tower, a plurality of blades, and a nacelle positioned atop the tower and attached to the plurality of blades. The nacelle includes a low speed rotor shaft having a plurality of magnetized domains located about the rotor shaft and at least two sets of first and second magnetometers, each set being located on one of the magnetized domains, wherein signals from the at least two sets of first and second magnetometers can be utilized to determine real-time torsional and linear forces being exerted on the rotor shaft.

An embodiment of the invention includes a method of determining forces being exerted on a wind turbine rotor shaft. The method includes forming magnetized domains on a rotor shaft; providing pairs of first and second magnetometers, each pair being sited either on or offset from a respective magnetized domain on a rotor shaft; determining a magnetostrictive signal for each pair of first and second magnetometers; and determining from the magnetostrictive signals the force being exerted on the rotor shaft.

Various features, aspects and advantages of the present invention may be further understood and/or illustrated when the following detailed description is considered along with the attached drawings, in which:
FIG. 1 is a partial perspective view of a wind turbine in accordance with an embodiment of the invention.
FIG. 2 is a schematic view illustrating an interior of a nacelle of the wind turbine of FIG. 1.
FIG. 3 is a schematic view of a rotor shaft with a magnetostrictive sensing system in accordance with an embodiment of the invention.
FIG. 4 illustrates a magnetized domain formed on the rotor shaft of FIG. 3 in accordance with an embodiment of the invention.
FIGS. 5 and 6 are schematic views illustrating potential electrical power and data transfer arrangements for the magnetostrictive sensing system of FIG. 3 in accordance with an embodiment of the invention.
FIG. 7 is a schematic view illustrating a data transfer arrangement for the magnetostrictive sensing system of FIG. 3 in accordance with an embodiment of the invention.
FIGS. 8A and 8B are a schematic representation of the magnetostrictive sensing system of FIG. 3 and readout in accordance with an embodiment of the invention.
FIG. 9 illustrates a graph showing the correlation between measured torque on the rotor shaft and the output of the generator.
FIG. 10 illustrates a correlation between strain gauge readings for a bending force and magnetic sensor readings for the same bending force.
FIG. 11 illustrates a process for determining forces on a rotor shaft in accordance with an embodiment of the invention.

The present specification provides certain definitions and methods to better define the embodiments and aspects of the invention and to guide those of ordinary skill in the art in the practice of its fabrication. Provision, or lack of provision, of a definition for a particular term or phrase is not meant to imply any particular importance, or lack thereof; rather, and unless otherwise noted, terms are to be understood according to conventional usage by those of ordinary skill in the relevant art.

Unless defined otherwise, technical and scientific terms used herein have the same meaning as is commonly understood by one of skill in the art to which this invention belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced item, and the terms "front", "back", "bottom", and/or "top", unless otherwise noted, are merely used for convenience of description, and are not limited to any one position or spatial orientation. If ranges are disclosed, the endpoints of all ranges directed to the same component or property are inclusive and independently combinable.

The modifier "about" used in connection with a quantity is inclusive of the stated value and has the meaning dictated by the context (e.g., includes the degree of error associated with measurement of the particular quantity). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described inventive features may be combined in any suitable manner in the various embodiments.

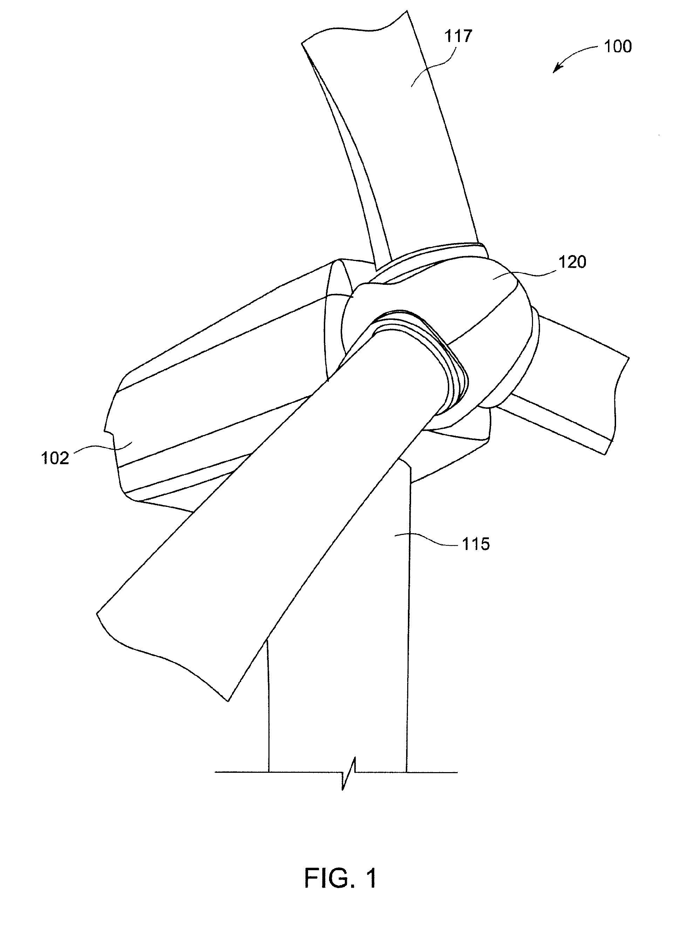

As illustrated in FIG. 1, a wind turbine 100 includes a tower 115 upon which a nacelle 102 is attached. The nacelle 102 includes a hub 120 into which turbine blades 117 are anchored.

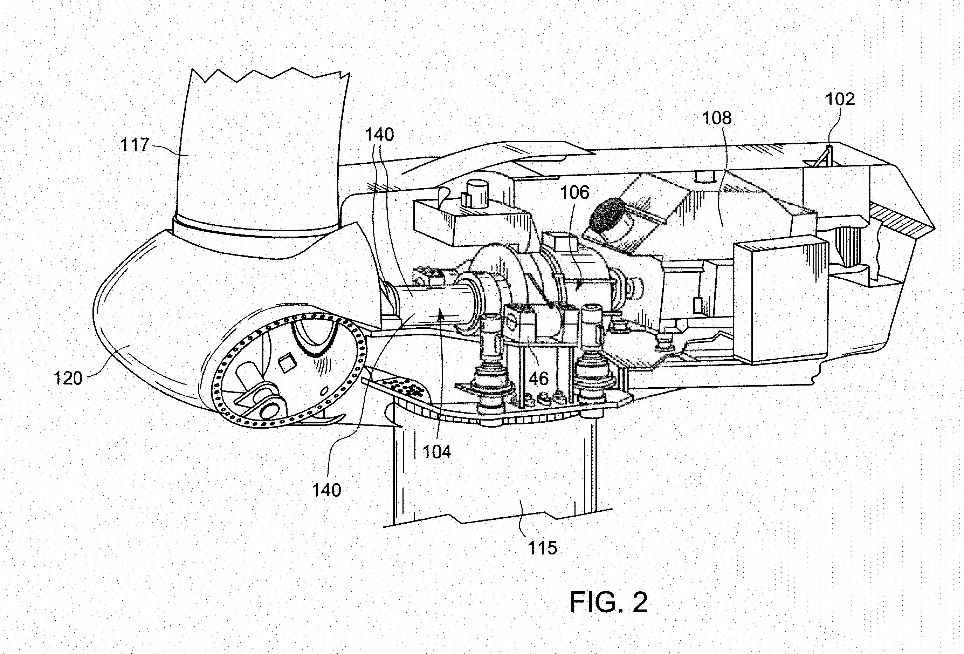

FIG. 2 illustrates the interior components of a nacelle for a typical commercial wind turbine. The nacelle 102 houses a low speed rotor shaft 104 extending from the hub 120. The low speed rotor shaft 104 translates the wind energy harvested by the turbine blades 117 into rotary energy. The rotor shaft 104 is connected to a gearbox 106, which takes the slow rotational speed of the rotor shaft and increases it, through gearing, to a higher rotational speed. The gearbox 106 is in connection with a generator 108, which takes the rotational energy from the gearbox 106 and translates it into electricity. A magnetostriction sensing system 140 (to be described in greater detail later) may be sited in one or more locations along the rotor shaft 104.

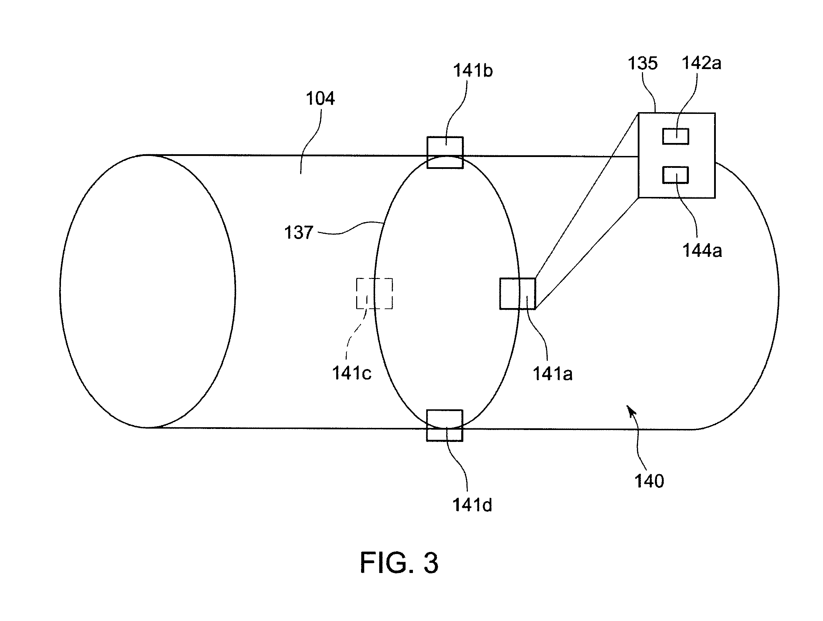

FIG. 3 schematically illustrates the low speed rotor shaft 104 in accordance with an embodiment of the invention. The rotor shaft 104 has been subjected to magnetization to form localized magnetized domains 135 at various positions around the shaft. As shown, the localized magnetized domains 135 may be found within a single plane 137 substantially orthogonal to the axial direction of the rotor shaft 104.

A magnetostriction sensing system 140 includes two or more pairs of magnetostriction sensors, or magnetometers. The pairs of magnetometers are placed within each of the localized magnetized domains 135. As illustrated in FIG. 3, pairs of magnetometers 142, 144 are sited at sensor positions 141 that are each within a localized magnetized domain 135. Specifically, magnetometers 142a, 144a are sited at sensor position 141a within a localized magnetized domain 135. Approximately 180 degrees around the rotor shaft 104 from the sensor position 141a and within the plane 137 are sited magnetometers at sensor position 141c within a localized magnetized domain 135. A pair of magnetometers is sited at a sensor position 141b, approximately 90 degrees from both sensor positions 141a and 141c, within a localized magnetized domain 135. Finally, a pair of magnetometers is sited at a sensor position 141d, approximately 180 degrees from sensor position 141b, within a localized magnetized domain 135.

It should be appreciated that although the sensor positions have been illustrated and discussed as being sited at the localized magnetized domains 135, the sensor positions may instead be offset from the localized magnetized domains, either within the plane 137 or outside of the plane 137. Additionally, although the magnetostriction sensing system is shown to be in contact with the rotor shaft 104, it should be appreciated that non-contact sensing may be used instead. Although four sensor positions are illustrated, it should be understood that more or less than four sensor positions may be utilized. The number of sensor positions may correspond with the number of localized magnetized domains. It should be pointed out that the number of sensor positions should preferably be an even number, as signals from sensors at opposing sensor positions may be utilized in determining the force exerted on the wind turbine. Although a single plane 137 is illustrated, it should be understood that more than one plane 137 containing localized magnetized domains may be formed along the rotor shaft 104. Finally, it should be appreciated that additional sensors of, for example magnetic field and/or temperature, may be sited on the rotor shaft. Additional magnetometers may be used to monitor background magnetic fields, such as the earth's magnetic field and/or extraneous electro-magnetic interference (EMI), while additional temperature sensors may be used to monitor temperature changes. Temperature change and background magnetic interference can affect the signals from the primary magnetometers. By monitoring the temperature change and background magnetic interference, the magnitude of the effect can be mathematically eliminated by the microcontroller and/or the PLC.

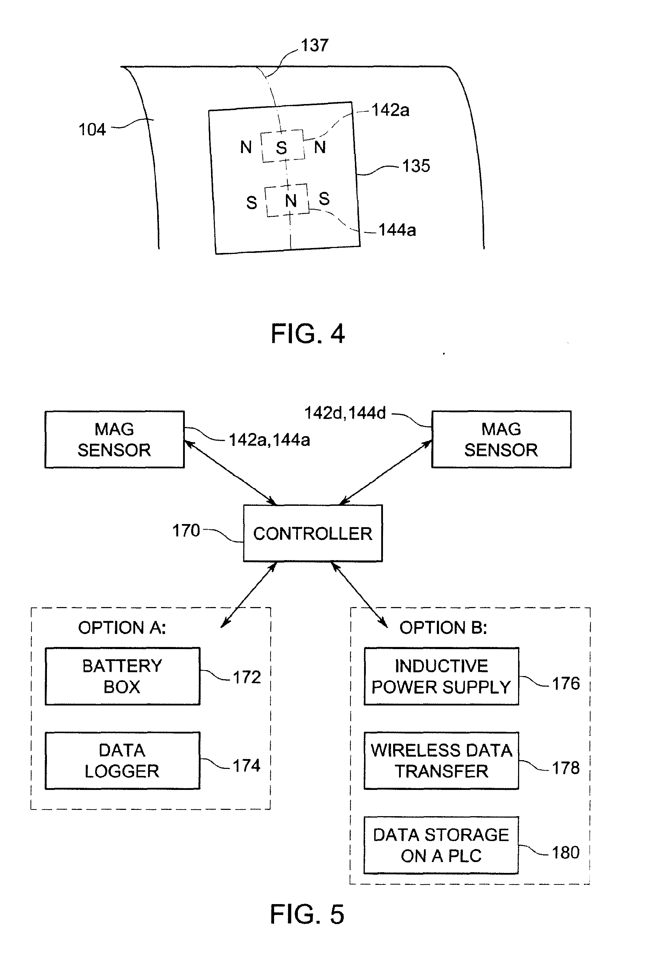

The localized magnetization of certain regions of the rotor shaft 104 is accomplished in a way in which the regions remain magnetized for a lengthy period of time, preferably for the life of the rotor shaft. For example, the rotor shaft 104 may be subjected to a localized magnetization process as described in U.S. patent no. 7,631,564, the entire contents of which are incorporated herein by reference. As shown in FIG. 4, the localized magnetization forms polarized areas within the magnetized domain 135. The polarized areas may form a first region having two positive (N) areas sandwiching a negative (S) area and a second region having two negative (S) areas sandwiching a positive (N) area, both regions straddling the plane 137. Upon a force being exerted on the rotor shaft, the magnetic field strength of the polarized areas changes proportionally to the stress experienced. The magnetometers are configured to measure that magnetic field strength and transmit signals of their measurements.

As illustrated, the magnetometers may be sited such that one magnetometer 142a is within the first region straddling the plane 137 and the second magnetometer 144a is within the second region straddling the plane 137. The benefit to siting the magnetometers thusly is to remove background field error and to double the magnetostrictive signal. In other words, both of the magnetometers are enabled to detect the same background magnetic field, but with an oppositely signed magnetostrictive signal. When subtracting these signals, the background field is removed but the magnetostrictive signal is doubled. Alternatively, the sensors 142a, 144a (and the other pairs of sensors) may be located offset from the localized magnetized domains 135.

In operation, the magnetometers at each sensor position measure a change in magnetic field strength of a specific localized magnetized domain. The measurements of each magnetostriction sensor at each sensor position are transmitted to either a microcontroller on the rotor shaft 104 or a programmable logic controller (PLC) located away from the rotor shaft. The microcontroller and/or the PLC are configured to subtract signals of one of the magnetometers from each sensor position from the other of the magnetometers from the same sensor position to obtain a corrected magnetostrictive signal for each set of magnetometers.

Then, having obtained corrected magnetostrictive signals for each sensor position, the microcontroller and/or the PLC are configured to add the corrected magnetostrictive signal from the set of magnetometers at one sensor position to the corrected magnetostrictive signal of another set of magnetometers located at a sensor position approximately 180 degrees around the rotor shaft to determine a real-time torsional force being exerted on the rotor shaft. Further, the microcontroller and/or the PLC are configured to subtract the corrected magnetostrictive signal from the set of magnetometers at one sensor position from the corrected magnetostrictive signal of another set of magnetometers located at a sensor position approximately 180 degrees around the rotor shaft to determine a real-time linear force being exerted on the rotor shaft. In this way, the magnetometers, in combination with the microcontroller and/or PLC, can determine in real-time both linear and torsional forces being exerted on the rotor shaft 104.

Some wind turbines include a flange at one end thereof, as well as bearings and labyrinth seals positioned about the rotor shaft. The magnetostriction sensing system 140 may be sited in one or more sections of the rotor shaft. For example, the magnetostriction sensing system 140 may be sited between the flange and the bearings. Alternatively, the magnetostriction sensing system 140 may be sited on the far side of the bearings from the flange. For larger turbines, such as 3.5 megawatt turbines that include a pair of bearings, the magnetostriction sensing system 140 may be sited before the flange; after flange but before the first bearings; between the bearings; or after the second bearings. Magnetometers can be located immediately after the bearings or within a certain distance after. Proper siting of the siting of the magnetostriction sensing system should be where the forces affecting the rotor shaft are at their highest so that the greatest signals can be obtained there.

FIG. 5 illustrates options for providing power to the magnetometers 142a, 144a through 142d, 144d. Option A includes a controller 170, a battery 172, and a data logger 174, all of which are located on the rotor shaft 104. In one embodiment, the controller 170 is a microcontroller. The battery 172 provides power to the magnetometers 142a, 144a through 142d, 144d via the controller 170. The data logger 174 collects the data from the magnetometers 142a, 144a through 142d, 144d via the controller 170. The collected data can be retrieved and analyzed to provide non-real time information on the forces being exerted on the wind turbine, and more particularly, on the rotor shaft 104. The collected data also can be used as a real-time input for controls in Option B, and therefore is not necessarily logged. Alternatively, the collected data could be both logged (by the data logger) and used for input for real-time controls. In case of a failure, the logged data could be analyzed to see what happened before critical failure event. This function is analogous to the "black box" function in airplanes.

Option B includes a wireless power supply 176, a wireless data transfer apparatus 178, and data storage on a programmable logic controller 180. In one embodiment, the wireless power supply 176 is an inductive power supply. The wireless power supply 176, the wireless data transfer apparatus 178, and the programmable logic controller 180 are located apart from the rotor shaft 104.

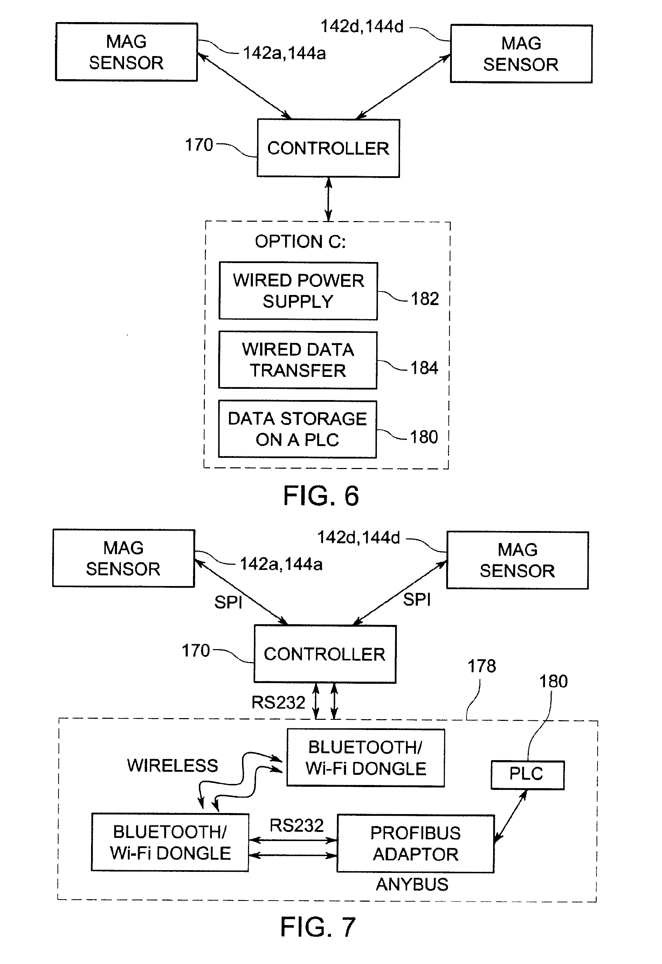

FIG. 6 illustrates a third option, Option C, for providing power to the magnetometers 142a, 144a through 142d, 144d. In this embodiment, the power to the magnetometers and data transfer from the magnetometers occurs via the controller 170. In this embodiment, however, a wired power supply 182, located apart from the rotor shaft provides power to the magnetometers. The wires may be held in position away from moving parts through the use of slip rings. Additional wires between the controller 170 and a wired data transfer apparatus 184 located apart from the rotor shaft also may be held in position away from moving parts through the use of slip rings. After the slip rings, the wiring can be made located from the hub via the flange of the turbine or through a hole that is bored into the low speed shaft. Data transferred from the magnetometers to the wired data transfer apparatus 184 may be stored in a storage medium of the programmable logic controller 180.

It should be appreciated that, for Options B and C, a redundant battery, such as battery 172, can be included in the system. The redundant battery would run the system during a power failure and shutdown of the turbine. During normal operation, the battery would be in a stand-by mode.

It should be appreciated that the collected data from the sensing signals can be used as an input for active control of various factors related to the wind turbine. Some of the factors can be pitch drive and yaw angle for example. Another factor is active braking, which is based on controlling the active power intake of the power converters. Specifically, the sensing signals can be used to reduce loads and to reduce component fatigue on various turbine parts, such as shafts, gearbox, bearings, blades, and the tower itself, for example. The sensing signals can be used to adjust the blade angles, the yaw angle, and converter output power, either during operation or during emergency stops.

FIG. 7 illustrates in greater detail the wireless data transfer apparatus 178 of FIG. 5. Data may be transferred from the magnetometers to the controller 170 through any number of various communication standards, protocols and architectures. For example, data may be transferred via a serial peripheral interface (SPI) bus. The SPI is a synchronous serial data link standard that operates in a full duplex mode. The communication occurs through a master/slave mode, wherein the microcontroller of the programmable logic controller is the master device that initiates the data frame and magnetometers are the slave devices. Other options beside serial protocols may be used, for example, 12C, RS233, CAN, and the like. Also, producer/consumer-based or wireless ad hoc architectures may be utilized.

Data transferred to the controller 170 is further transferred to the wireless data transfer apparatus 178 through a single ended data transfer element, such as a RS232. Specifically, in the communication loop between the controller 170 and the data transfer apparatus 178, the controller 170 is, for example, a slave or producer in a RS232 standard-based communication protocol. The programmable logic controller acts as a master, or as a consumer, in this configuration. Between these two fundamental entities, wireless modules and protocol/standard adapters can be implemented. Bluetooth and Wi-Fi are examples of suitable wireless standards that can be utilized. It should be appreciated that, as mentioned before, other protocols, architectures, or standards can be used.

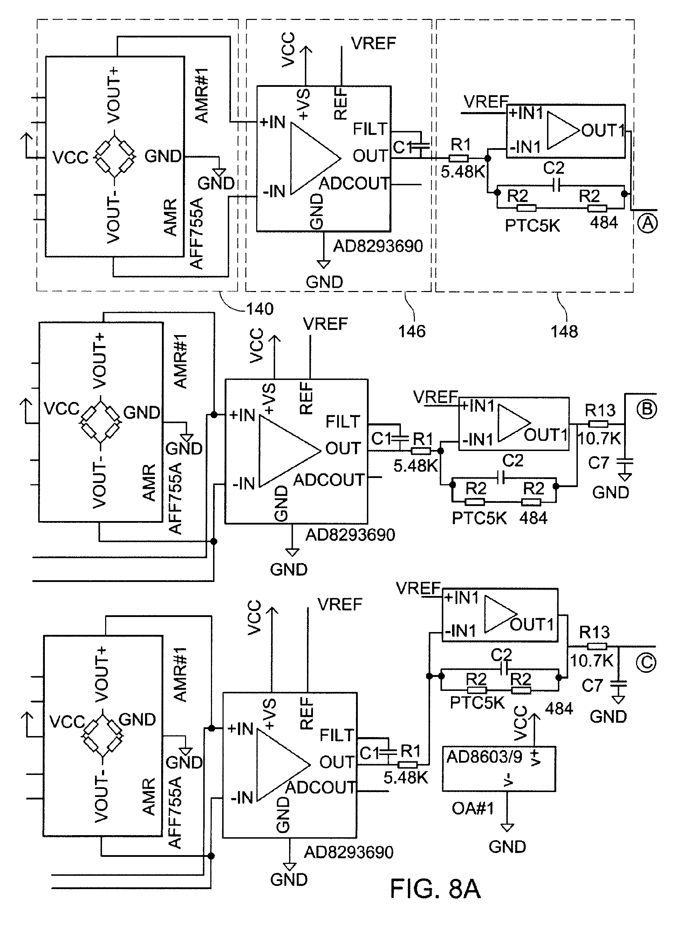

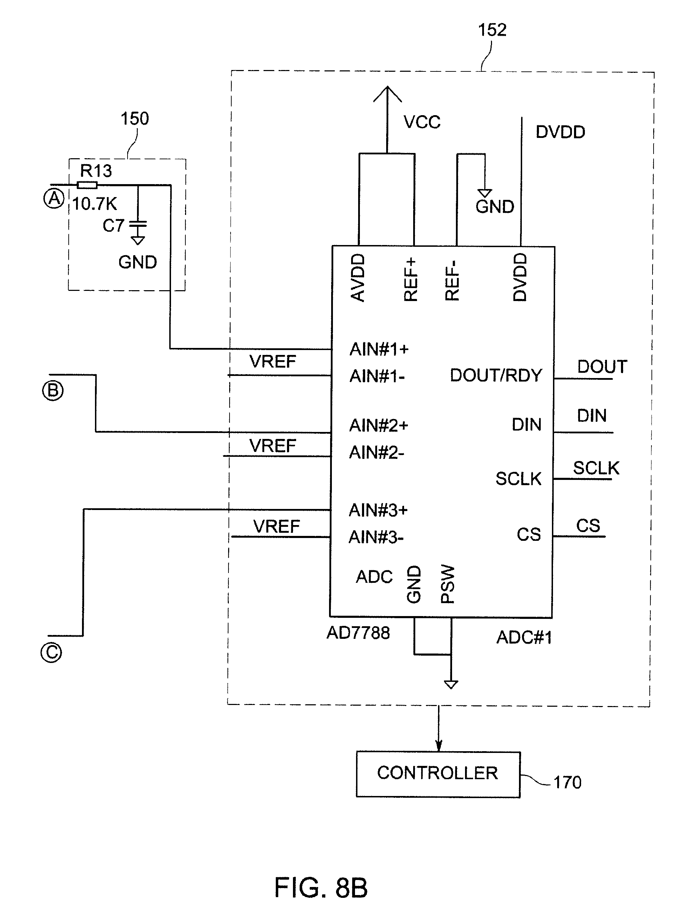

FIGS. 8A and 8B illustrate the magnetostrictive sensing system 140 and readout electronics. Data signals from the magnetostrictive sensing system 140 are transferred to an amplifier 146, which amplifies the signal above the noise level of an analog-to-digital converter (ADC) and suppresses a common mode signal. From the amplifier 146, the data transfers to analog filters 148, which filter out high frequency noise and prevent aliasing to this high frequency measurement bandwidth. From the analog filters 148, the data is sent to an anti-aliaser 150, which continues to filter out signals at frequencies deemed to be too high. It should be appreciated that the analog filters 148 themselves perform anti-aliasing, and that the inclusion of an anti-aliaser, such as anti-aliaser 150 is more symbolic of the function being performed by all of the analog filters 148. Obviously, the more analog filters 148 employed the better the signal performance can be made. Then, the data is transferred to an analog-to-digital converter (ADC) 152. Finally, the now digitized data is transferred to the controller 170.

The configuration of FIGS. 8A and 8B is also enabled to alter the amplification based on temperature. A positive temperature coefficient thermistor may be connected into the feedback loop of the operational amplifier. By doing so, any temperature effects in the sensitivity of the magnetometers can be compensated for. Alternatively, temperature compensation can be performed digitally by the microcontroller and/or the programmable logic controller.

It further should be appreciated that analog filtering is but one example of a suitable electronics configuration. For example, digital notch-filtering and switched capacitor based filtering can be utilized instead of analog filtering.

In one embodiment, a complete sensor system includes sixteen magnetometers, eight of which are used for redundancy and to detect background magnetic field strength. Additionally, temperature sensors are applied to the rotor shaft 104 to measure temperature fluctuations that will be used to compensate out the environmental changes. The read-out electronics will include amplification, analog filtering, temperature compensation, and analog-to-digital conversion (ADC). The read-out electronics can be mounted on a flexible printed circuit board (PCB), which is better suited for mounting onto cylindrical shafts. The ADC is performed in the vicinity of the sensors to minimize the effects of electromagnetic interference (EMI). Any EMI can be suppressed through Mu-metal shielding, the use of digital signal transmission, and analog paths that are short, on the order of about 10 millimeters. Mu-metal shielding is shielding including particular metals that having properties that make it very efficient to shield magnetic fields from coupling to electrical circuits. Examples of suitable mu-metals include a nickel-iron alloy (approximately 75% nickel, 15% iron, plus copper and molybdenum) that has very high magnetic permeability.

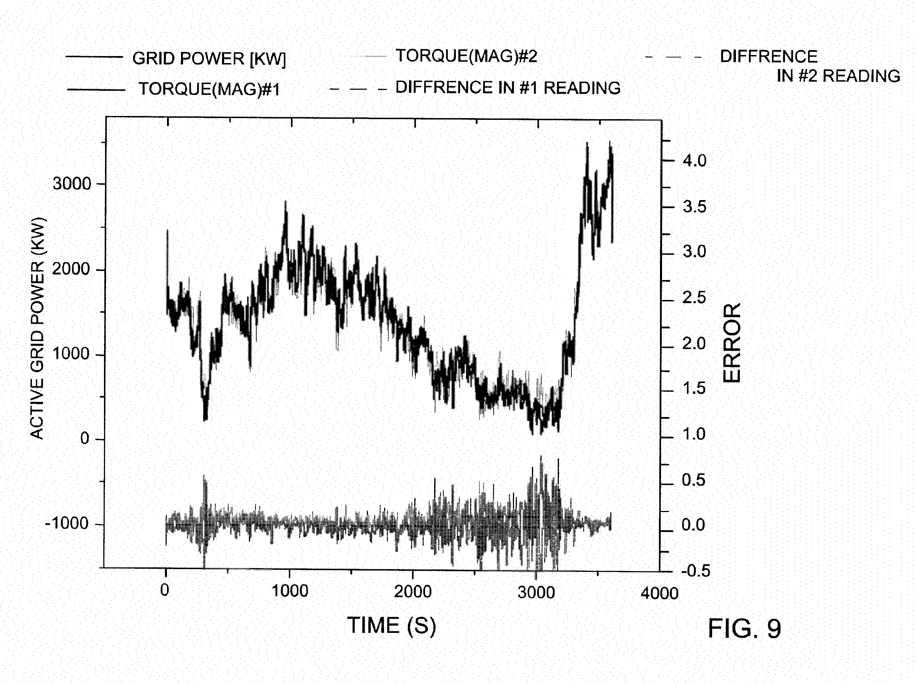

FIG. 9 is a graph that illustrates a correlation between force exerted on a rotor shaft of a wind turbine, such as rotor shaft 104, and the power generated by the rotor shaft 104. As illustrated, the power generated by a wind turbine is graphed over time. Also, the torque caused by wind twisting the wind turbine is determined by two magnetometers and graphed over time. As shown in the graph, there is close correlation between the torque determined in real time by the magnetometers and the power generated by the wind turbine.

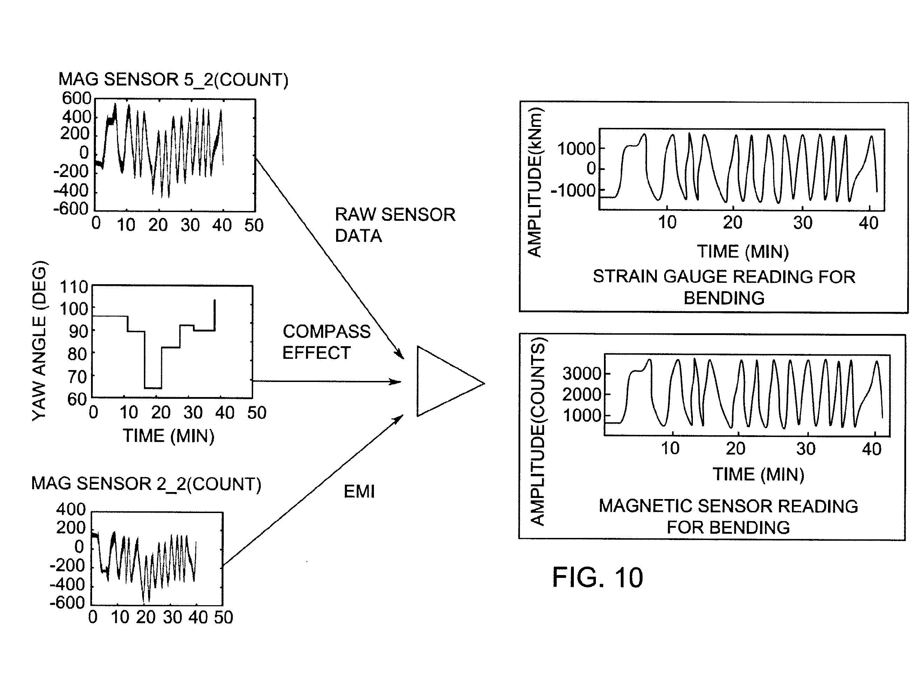

FIG. 10 illustrates a correlation between strain gauge measurements and magnetometers measurements. Strain gauges have been used to determine linear forces on rotor shafts, and are generally considered to be accurate in determining the linear forces. One disadvantage of strain gauges is that their effective lifespan is generally between about one and five years. As illustrated, raw magnetostriction sensor data was obtained on linear forces being exerted on a rotor shaft. As is clear, there can be seemingly little correlation between the raw data from the magnetometers and the strain gauge measurements. Next, the compass effect was filtered out of the raw magnetostriction sensor data. The compass effect is the effect caused by the magnetic field of the earth. Finally, electro-magnetic interference (EMI) from extraneous outside magnetic effects is filtered out of the raw magnetostriction sensor data. The result is a close correlation between the filtered magnetostriction sensor measurements and the strain gauge measurements.

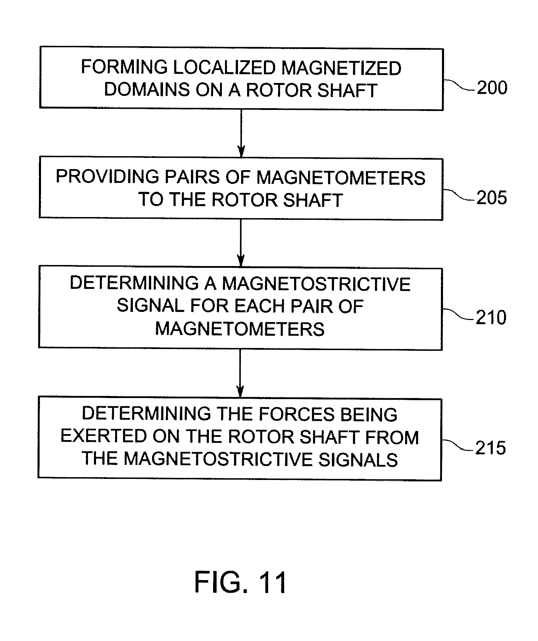

FIG. 11 illustrates a method for determining force being exerted on a rotor shaft of a wind turbine. At step 200, magnetized domains are formed on a rotor shaft. In one embodiment, at least four magnetized domains are formed on the rotor shaft. At step 205, pairs of sensors capable of sensing magnetic field changes are provided at various locations around the rotor shaft. In one embodiment, the sensors are magnetometers. In one embodiment, each pair of sensors is sited on a respective one of the magnetized domains. In another embodiment, one or more pairs of sensors are sited offset from the magnetized domains. In another embodiment, four pairs of sensors are sited wherein each pair of sensors is offset approximately 90 degrees from adjacent pairs of sensors. At step 210, a magnetostrictive signal is determined for each pair of sensors. The magnetometers at each sensor position measure a change in magnetic field strength of a specific localized magnetized domain. The measurements of each magnetometer at each sensor position are transmitted to either a microcontroller on the rotor shaft 104 or a programmable logic controller (PLC) located away from the rotor shaft. The microcontroller and/or the PLC are configured to subtract signals of one of the magnetometers from each sensor position from the other of the magnetometers from the same sensor position to obtain a corrected magnetostrictive signal for each set of magnetometers. Then, at step 215, the forces being exerted on the rotor shaft are determined. Having obtained corrected magnetostrictive signals for each sensor position, the microcontroller and/or the PLC are configured to add the corrected magnetostrictive signal from the set of magnetometers at one sensor position to the corrected magnetostrictive signal of another set of magnetometers located at a sensor position approximately 180 degrees around the rotor shaft to determine a real-time torsional force being exerted on the rotor shaft. Further, the microcontroller and/or the PLC are configured to subtract the corrected magnetostrictive signal from the set of magnetometers at one sensor position from the corrected magnetostrictive signal of another set of magnetometers located at a sensor position approximately 180 degrees around the rotor shaft to determine a real-time linear force being exerted on the rotor shaft. In this way, the magnetometers, in combination with the microcontroller and/or PLC, can determine in real-time both linear and torsional forces being exerted on the rotor shaft 104.

Other sensors, such as, for example, background magnetic field sensors and temperature sensors, may be included within the sensor system an used to correct for background magnetic field and/or temperature effects on the magnetostriction signals. Additionally, there are some instances when a wind turbine is not coincident with the earth's gravitation vector. In such instances, a small error may occur when the nacelle rotates. Some magnetic field or position sensors may be included to measure yaw angle to so that the yaw angle error may be corrected for.

Various of the embodiments of the invention described herein will enable greater control of asymmetrical loads on wind turbines. By being more able to determine asymmetrical loads on a wind turbine, the operating parameter margins for wind turbines can be decreased, allowing wind turbine operators the ability to get greater power out of the wind turbines.

Various embodiments of the invention can be used to measure time-domain signals or to perform frequency transform for the purpose of monitoring any natural and unwanted oscillation modes of a turbine. Further, signals generated by embodiments of the invention can be used to actively control yaw angle, blade pitch angles, and braking power due to the converter intake, for example.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. For example, while embodiments have been described in terms that may initially connote singularity, it should be appreciated that multiple components may be utilized. Further, while the magnetometer positions have been shown and described on low speed rotor shafts, it should be understood that such magnetometers can be sited on any suitable high strength steel structure having magnetostrictive properties, such as, for example, high speed shafts, bearings, gearbox, and possibly the tower if fabricated out of appropriate material. Also, while the wind turbines that have been illustrated and described include a gearbox and a high-speed shaft, it should be appreciated that other forms of wind turbines can be utilized with the magnetometers. For example, direct drive systems, can be used in commercial wind turbines. In direct drive systems, the gearbox and high-speed shaft is omitted. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A sensor system for sensing force on a wind turbine rotor shaft having multiple localized magnetized domains sensitive to magnetic fields, comprising at least two sets of first and second magnetometers, wherein signals from the at least two sets of first and second magnetometers can be utilized to determine torsional and linear forces being exerted on the wind turbine rotor shaft.
2. The sensor system of clause 1, wherein the at least two sets of first and second magnetometers are each located on one of the magnetized domains.
3. The sensor system of any preceding clause, comprising:
   readout electronics;
   a communication system;
   a power supply unit; and optionally
   a microcontroller.
4. The sensor system of any preceding clause, comprising at least one sensor for determining temperature change or at least one background sensor for determining a background magnetic field.
5. The sensor system of any preceding clause, wherein a temperature compensation is performed by the readout electronics or by the microcontroller.
6. The sensor system of any preceding clause, wherein the power supply unit supplies power to the sensor system via power lines, wirelessly either via inductive coupling or via an optical link, or via a battery.
7. The sensor system of any preceding clause, wherein the communication system is configured to collect data and forward the data to a programmable logic controller either wirelessly or by wire.
8. The sensor system of any preceding clause, wherein the programmable logic controller or the microcontroller is configured to subtract signals of one of the first and second magnetometers from the other of the first and second magnetometers for each set of magnetometers to obtain a corrected magnetostrictive signal for each set of magnetometers.
9. The sensor system of any preceding clause, comprising four sets of first and second magnetometers, each set located approximately 90 degrees from adjacent sets along a plane within one of the magnetized domains.
10. The sensor system of any preceding clause, wherein the programmable logic controller or the microcontroller is configured to:
   add the corrected magnetostrictive signal of one set of magnetometers to the corrected magnetostrictive signal of another set of magnetometers located approximately 180 degrees around the rotor shaft to determine a real-time torsional force being exerted on the rotor shaft; and
   subtract the corrected magnetostrictive signal of one set of magnetometers from the corrected magnetostrictive signal of another set of magnetometers located approximately 180 degrees around the rotor shaft to determine a real-time linear force being exerted on the rotor shaft.
11. A wind turbine, comprising:
   a tower;
   a plurality of blades;
   a nacelle positioned atop the tower and attached to the plurality of blades, said nacelle comprising:
      a low speed rotor shaft having a plurality of magnetized domains located about the rotor shaft; and
      at least two sets of first and second magnetometers each set being located on one of the magnetized domains or between two adjacent magnetized domains, wherein signals from the at least two sets of first and second magnetometers can be utilized to determine real-time torsional and linear forces being exerted on the rotor shaft.
12. The wind turbine of any preceding clause, comprising:
   readout electronics;
   a wireless communication system;
   a wireless power supply unit; and
   a microcontroller or a programmable logic controller;
   wherein said at least two sets of first and second magnetometers comprises four sets of first and second magnetometers, each set being located approximately 90 degrees from adjacent sets along a plane on one of the magnetized domains.
13. The wind turbine of any preceding clause, wherein the microcontroller or the programmable logic controller is configured to subtract signals from one of the first and second magnetometers from the other of the first and second magnetometers for each set of magnetometers to determine background magnetic field signals and obtain a corrected magnetostrictive signal for each set of magnetometers.
14. The wind turbine of any preceding clause, wherein the corrected magnetostrictive signal is used to reduce loads and/or fatigue on components of the wind turbine.
15. The wind turbine of any preceding clause, wherein the corrected magnetostrictive signal reduces loads and/or fatigue by adjusting an angle of the plurality of blades, by adjusting an angle of yaw between wind and the nacelle, or by adjusting converter output power of the wind turbine.
16. The wind turbine of any preceding clause, wherein the microcontroller or the programmable logic controller is configured to measure a yaw angle of the wind turbine using the background magnetic field signals.
17. The wind turbine of any preceding clause, wherein the microcontroller or the programmable logic controller is configured to:
   add the corrected magnetostrictive signal of one set of magnetometers to the magnetostrictive signal of another set of magnetometers located approximately 180 degrees around the rotor shaft to determine a torsional force being exerted on the rotor shaft; and
   subtract the corrected magnetostrictive signal of one set of magnetometers from the magnetostrictive signal of another set of magnetometers located approximately 180 degrees around the rotor shaft to determine a linear force being exerted on the rotor shaft.
18. A method of determining forces being exerted on a wind turbine rotor shaft, comprising:
   forming magnetized domains on a rotor shaft;
   providing pairs of first and second magnetometers, each pair being sited either on or offset from a respective magnetized domain on a rotor shaft;
   determining a magnetostrictive signal for each pair of first and second magnetometers; and
   determining from the magnetostrictive signals the force being exerted on the rotor shaft.
19. The method of any preceding clause, wherein said determining a magnetostrictive signal comprises subtracting signals of the first magnetostriction sensor of each pair of magnetometers from the second magnetostriction sensor of each respective same pair of magnetometers to determine background magnetic field signals and obtain a corrected magnetostrictive signal for each set of magnetometers.
20. The method of any preceding clause, wherein said determining from the magnetostrictive signals the force being exerted comprises:
   adding the corrected magnetostrictive signal of one set of magnetometers to the corrected magnetostrictive signal of another set of magnetometers located approximately 180 degrees around the rotor shaft to determine a torsional force being exerted on the rotor shaft; and
   subtracting the corrected magnetostrictive signal of one set of magnetometers from the corrected magnetostrictive signal of another set of magnetometers located approximately 180 degrees around the rotor shaft to determine a linear force being exerted on the rotor shaft.

## Claims

1. A sensor system (140) for sensing force on a wind turbine rotor shaft (104) having multiple localized magnetized domains (135) sensitive to magnetic fields, comprising at least two sets of first (142) and second (144) magnetometers, wherein signals from the at least two sets of first and second magnetometers can be utilized to determine torsional and linear forces being exerted on the wind turbine rotor shaft.

2. The sensor system (140) of claim 1, wherein the at least two sets of first and second magnetometers are each located on one of the magnetized domains.

3. The sensor system (140) of any preceding claim, comprising:
readout electronics (146, 148, 150, 152);
a communication system (178, 184);
a power supply unit (172, 176, 182); and optionally
a microcontroller (170).

4. The sensor system (140) of any preceding claim, comprising at least one sensor for determining temperature change or at least one background sensor for determining a background magnetic field.

5. The sensor system (140) of any preceding claim, wherein a temperature compensation is performed by the readout electronics or by the microcontroller.

6. The sensor system (140) of any preceding claim, wherein the power supply unit supplies power to the sensor system via power lines, wirelessly either via inductive coupling or via an optical link, or via a battery.

7. The sensor system (140) of any preceding claim, wherein the communication system is configured to collect data and forward the data to a programmable logic controller (180) either wirelessly or by wire.

8. The sensor system (140) of claim 7, wherein the programmable logic controller (180) or the microcontroller is configured to subtract signals of one of the first and second magnetometers from the other of the first and second magnetometers for each set of magnetometers to obtain a corrected magnetostrictive signal for each set of magnetometers.

9. The sensor system (140) of any preceding claim, comprising four sets of first and second magnetometers, each set located approximately 90 degrees from adjacent sets along a plane within one of the magnetized domains.

10. The sensor system (140) of any preceding claim, wherein the programmable logic controller (180) or the microcontroller is configured to:
add the corrected magnetostrictive signal of one set of magnetometers to the corrected magnetostrictive signal of another set of magnetometers located approximately 180 degrees around the rotor shaft to determine a real-time torsional force being exerted on the rotor shaft; and
subtract the corrected magnetostrictive signal of one set of magnetometers from the corrected magnetostrictive signal of another set of magnetometers located approximately 180 degrees around the rotor shaft to determine a real-time linear force being exerted on the rotor shaft.
